# EUROPEAN PATENT APPLICATION

(11) **EP 4 598 172 A1**
(43) Date of publication of application: **06.08.2025**
(21) Application number: 22960323.8
(22) Date of filing: 30.09.2022
(51) Int. Cl.: H04W 68/02, H04W 36/08

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: RGTH
(86) International application number: PCT/CN2022/123344
(87) International publication number: WO 2024/065704

(57) **Abstract**

Disclosed are a communication method and a communications apparatus. The method includes: receiving, by a first network device, first information, where the first information indicates whether a first terminal device supports a first capability. The method in embodiments of this application facilitates reduction of power consumption of a communications system.

## Description

### TECHNICAL FIELD

This application relates to the field of communications technologies, and more specifically, to a communication method and a communications apparatus.

### BACKGROUND

With development of communications technologies, energy consumption of a communications network is becoming increasingly high, which has become an important part of operation costs of an operator. Therefore, how to reduce energy consumption of a communications network becomes an urgent technical problem to be resolved.

### SUMMARY

Embodiments of this application provide a communication method and a communications apparatus. The following describes the aspects involved in embodiments of this application.

According to a first aspect, a communication method is provided, including: receiving, by a first network device, first information, where the first information indicates whether a first terminal device supports a first capability.

According to a second aspect, a communication method is provided, including: transmitting, by an access and mobility management function AMF network element, first information to a first network device, where the first information indicates whether a first terminal device supports a first capability.

According to a third aspect, a communication method is provided, including: transmitting, by a second network device, first information to a first network device, where the first information indicates whether a first terminal device supports a first capability.

According to a fourth aspect, a communication method is provided, including: receiving, by a first network device, third information transmitted by a second network device, where the third information indicates any one of the following: whether the second network device allows access by a terminal device that supports a first capability, whether the second network device supports a terminal device that supports the first capability, whether the second network device allows access by a terminal device that does not support the first capability, or whether the second network device supports a terminal device that does not support the first capability.

According to a fifth aspect, a communication method is provided, including: transmitting, by a second network device, third information to a first network device, where the third information indicates any one of the following: whether the second network device allows access by a terminal device that supports a first capability, whether the second network device supports a terminal device that supports the first capability, whether the second network device allows access by a terminal device that does not support the first capability, or whether the second network device supports a terminal device that does not support the first capability.

According to a sixth aspect, a communications apparatus is provided, including a receiving unit, configured to receive first information, where the first information indicates whether a first terminal device supports a first capability.

According to a seventh aspect, a communications apparatus is provided, including a transmitting unit, configured to transmit first information to a first network device, where the first information indicates whether a first terminal device supports a first capability.

According to an eighth aspect, a communications apparatus is provided, including a transmitting unit, configured to transmit first information to a first network device, where the first information indicates whether a first terminal device supports a first capability.

According to a ninth aspect, a communications apparatus is provided, including a receiving unit, configured to receive third information transmitted by a second network device, where the third information indicates any one of the following: whether the second network device allows access by a terminal device that supports a first capability, whether the second network device supports a terminal device that supports the first capability, whether the second network device allows access by a terminal device that does not support the first capability, or whether the second network device supports a terminal device that does not support the first capability.

According to a tenth aspect, a communications apparatus is provided, including a transmitting unit, configured to transmit third information to a first network device, where the third information indicates any one of the following: whether the apparatus allows access by a terminal device that supports a first capability, whether the apparatus supports a terminal device that supports the first capability, whether the apparatus allows access by a terminal device that does not support the first capability, or whether the apparatus supports a terminal device that does not support the first capability.

According to an eleventh aspect, a communications apparatus is provided, including a memory, a transceiver, and a processor, where the memory is configured to store a program, the processor performs data transmission and reception by using the transceiver, and the processor is configured to invoke the program in the memory to cause the communications apparatus to execute the method according to the first aspect.

According to a twelfth aspect, a communications apparatus is provided, including a memory, a transceiver, and a processor, where the memory is configured to store a program, the processor performs data transmission and reception by using the transceiver, and the processor is configured to invoke the program in the memory to cause the communications apparatus to execute the method according to the second aspect.

According to a thirteenth aspect, a communications apparatus is provided, including a processor configured to invoke a program from a memory to cause the communications apparatus to execute the method according to the first aspect.

According to a fourteenth aspect, a communications apparatus is provided, including a processor configured to invoke a program from a memory to cause the communications apparatus to execute the method according to the second aspect.

According to a fifteenth aspect, a chip is provided, including a processor configured to invoke a program from a memory to cause a device on which the chip is installed to execute the method according to the first aspect.

According to a sixteenth aspect, a chip is provided, including a processor configured to invoke a program from a memory to cause a device on which the chip is installed to execute the method according to the second aspect.

According to a seventeenth aspect, a computer-readable storage medium is provided, where the computer-readable storage medium stores a program, and the program causes a computer to execute the method according to the first aspect.

According to an eighteenth aspect, a computer-readable storage medium is provided, where the computer-readable storage medium stores a program, and the program causes a computer to execute the method according to the second aspect.

According to a nineteenth aspect, a computer program product is provided, including a program, where the program causes a computer to execute the method according to the first aspect.

According to a twentieth aspect, a computer program product is provided, including a program, where the program causes a computer to execute the method according to the second aspect.

According to a twenty-first aspect, a computer program is provided, where the computer program causes a computer to execute the method according to the first aspect.

According to a twenty-second aspect, a computer program is provided, where the computer program causes a computer to execute the method according to the second aspect.

In embodiments of this application, first information indicates whether a first terminal device supports a first capability, and a first network device receives the first information, so that the first network device may determine a paging policy based on the first information, thereby facilitating reduction of power consumption of a communications system.

### BRIEF DESCRIPTION OF DRAWINGS

FIG. 1 is an example diagram of a wireless communications system to which embodiments of this application are applied.
FIG. 2 is a schematic flowchart of a communication method according to an embodiment of this application.
FIG. 3 is a schematic flowchart of a communication method according to another embodiment of this application.
FIG. 4 is a schematic flowchart of a communication method according to still another embodiment of this application.
FIG. 5 is a schematic flowchart of a communication method according to yet another embodiment of this application.
FIG. 6 is a schematic structural diagram of a communications apparatus according to an embodiment of this application.
FIG. 7 is a schematic structural diagram of a communications apparatus according to another embodiment of this application.
FIG. 8 is a schematic structural diagram of a communications apparatus according to still another embodiment of this application.
FIG. 9 is a schematic structural diagram of a communications apparatus according to yet another embodiment of this application.
FIG. 10 is a schematic structural diagram of a communications apparatus according to still yet another embodiment of this application.
FIG. 11 is a schematic structural diagram of an apparatus according to an embodiment of this application.

### DESCRIPTION OF EMBODIMENTS

The following describes the technical solutions in this application with reference to the accompanying drawings.

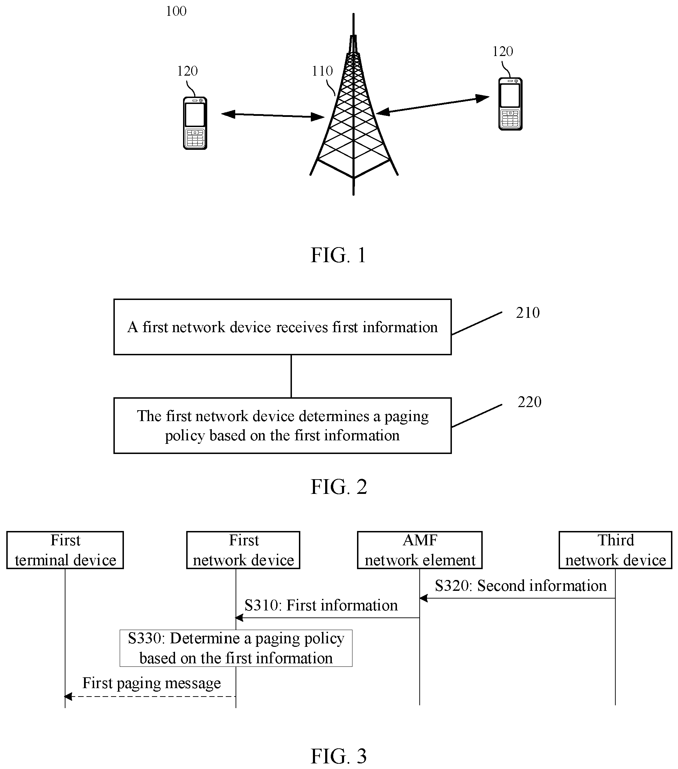

FIG. 1 shows a wireless communications system 100 to which embodiments of this application are applied. The wireless communications system 100 may include a network device 110 and a user equipment (user equipment, UE) 120. The network device 110 may communicate with the UE 120. The network device 110 may provide communication coverage for a specific geographic area, and may communicate with the UE 120 within the coverage area. The UE 120 may access a network (for example, a wireless network) by using the network device 110.

FIG. 1 exemplarily shows one network device and two UEs. Optionally, the wireless communications system 100 may include a plurality of network devices, and another quantity of terminal devices may be included within a coverage range of each network device, which is not limited in embodiments of this application. Optionally, the wireless communications system 100 may further include other network entities such as a network controller and a mobility management entity, which is not limited in embodiments of this application.

It should be understood that technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in this application may be further applied to a future communications system, such as a 6th generation mobile communications system or a satellite communications system.

The UE in embodiments of this application may also be referred to as a terminal device, an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, or a user apparatus. The UE in embodiments of this application may be a device providing a user with voice and/or data connectivity and capable of connecting people, objects, and machines, such as a handheld device or vehicle-mounted device having a wireless connection function. The UE in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be used to function as a base station. For example, the UE may function as a scheduling entity, which provides a sidelink signal between UEs in V2X, D2D, or the like. For example, a cellular phone and a vehicle communicate with each other by using a sidelink signal. A cellular phone and a smart home device communicate with each other, without needing to relay a communication signal by using a base station.

The network device in embodiments of this application may be a device for communicating with the UE. The network device may also be referred to as an access network device or a radio access network device. For example, the network device may be a base station. The network device in embodiments of this application may be a radio access network (radio access network, RAN) node (or device) that connects the UE to a wireless network. The base station may broadly cover various names in the following, or may be replaced with the following names: a NodeB (NodeB), an evolved NodeB (evolved NodeB, eNB), a next generation NodeB (next generation NodeB, gNB), a relay station, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof.

In some embodiments, the network device may be fixed or mobile. For example, a helicopter or an unmanned aerial vehicle may be configured to function as a mobile network device, and one or more cells may move depending on a location of the mobile network device. In other examples, a helicopter or an unmanned aerial vehicle may be configured to function as a device that communicates with another network device. In some embodiments, the network device may be a CU or a DU, or the network device may include a CU and a DU, or the network device may further include an AAU.

It should be understood that the network device may be deployed on land, including being indoors or outdoors, handheld, or vehicle-mounted, may be deployed on a water surface, or may be deployed on a plane, a balloon, or a satellite in the air. In embodiments of this application, the network device and a scenario in which the network device is located in embodiments of this application are not limited.

It should also be understood that all or some of functions of the network device and the UE in this application may also be implemented by software functions running on hardware, or by virtualization functions instantiated on a platform (for example, a cloud platform).

With people's pursuit of speed, latency, high-speed mobility, and energy efficiency, as well as diversity and complexity of services in future life, the 3rd generation partnership project (3rd generation partnership project, 3GPP) international standard organization starts to develop 5G. Main application scenarios of 5G are enhanced mobile broadband (enhanced mobile broadband, eMBB), ultra-reliable low-latency communications (ultra reliable low latency communications, URLLC), and massive machine type communications (massive machine type communications, mMTC).

eMBB aims to obtain multimedia content, services, and data for users, and requirements for eMBB increase rapidly. However, because eMBB may be deployed in different scenarios, such as an indoor scenario, an urban scenario, and a rural scenario, a difference between capabilities and requirements of eMBB in various scenarios is relatively large. Therefore, a specific deployment scenario needs to be analyzed in detail. Typical applications of URLLC include factory automation, power automation, remote medical operations (such as surgery), traffic safety assurance, and the like. Typical features of mMTC include a high connection density, a small data volume, latency-insensitive services, and low costs and a long service life of modules.

NR may be independently deployed. In a 5G network environment, to reduce air interface signalling, quickly restore a wireless connection, and quickly restore a data service, a new radio resource control (radio resource control, RRC) status, that is, an RRC inactive (RRC_INACTIVE) state, is specified. This state is different from an RRC idle (RRC_IDLE) state and an RRC active (RRC_ACTIVE) state.

RRC_IDLE: Mobility is a UE-based cell selection and re-selection, paging is initiated by a core network (core network, CN), and a paging area is configured by the CN. A UE access stratum (access stratum, AS) context does not exist on a base station side, and no RRC connections exist.

RRC_CONNECTED: An RRC connection exists, and a UE AS context exists between a base station and a UE. A network side knows that a location of the UE is at a specific cell level, mobility is a mobility controlled by the network side, and unicast data may be transmitted between the UE and the base station.

RRC_INACTIVE: Mobility is UE-based cell selection and re-selection. A connection between a core network and an access network (for example, a core network - new RAN (core network - new RAN, CN-NR) connection) exists. A UE AS context exists on a base station, paging is triggered by a RAN, and a RAN-based paging area is managed by the RAN. A network side knows that a location of a UE is at a RAN-based paging area level.

When being in the RRC_INACTIVE state, a UE autonomously returns to the RRC_IDLE state in the following cases:
when an initial paging message of a CN is received; if a timer T319 that is started when an RRC recovery request is initiated expires; when message 4 (MSG4) integrity protection verification fails; when a cell is re-selected to another radio access technology (radio access technology, RAT); and entering a camp on any cell (camp on any cell) state.

The RRC_INACTIVE state includes the following features:
a connection between a RAN and a CN is maintained; a UE and at least one base station store an AS context; the UE is reachable for the RAN side, and related parameters are configured by the RAN; the UE does not need to notify a network side when the UE moves within a RAN notification area (RAN notification area, RNA) configured by the RAN, but needs to notify the network side when the UE moves out of the RNA; and a cell selection and re-selection manner is used when the UE moves within the RNA.

The following briefly describes a paging (paging) mechanism in an NR system. Currently, the NR system may support CN-triggered paging and RAN-triggered paging.

CN-triggered paging is initiated by an access and mobility management function (access and mobility management function, AMF) network element, and UEs are paged within an entire registration area, that is, the AMF transmits paging messages (S1 application protocol (S1 application protocol, S1AP) messages) to gNBs within the entire registration area, and then the gNBs transmit paging messages in respective cells.

RAN-triggered paging is initiated by an anchor (anchor) gNB of a UE, and UEs are paged within an entire RAN notification area of the UE, that is, the anchor gNB transmits RAN paging messages (Xn application protocol (Xn application protocol, XnAP) messages) to gNBs within the RAN notification area, and then the gNBs transmit paging messages in respective cells.

With continuous development of communications technologies, energy consumption of a communications network is becoming increasingly high, which has become an important part of operation costs of an operator. According to a report of the global system for mobile communications association (global system for mobile communications association, GSMA), energy costs of a mobile network account for approximately 23% of total costs of an operator. Most of energy consumption comes from radio access networks, in particular, active antenna units (active antenna unit, AAU), while energy consumption of data centers and optical fiber transmission accounts for only a small share. Energy consumption of a communications network mainly includes the following two types:
dynamic part: for example, consumption during data transmission or reception; and
static part: for example, consumption of an operation of maintaining necessary radio access devices, even if there is no continuous data transmission or reception at this time.

This report should not only evaluate potential network energy consumption benefits, but also evaluate and balance an impact on network and user performance. However, this report should not have a great impact on some KPIs, such as spectrum efficiency, a capacity, UE perceived throughput (UE perceived throughput, UPT), a latency, UE power consumption, complexity, handover performance, a call drop rate, and initial access performance.

To reduce costs and power consumption, a reduced capability (reduced capability, RedCap) terminal device is introduced into some communications systems. The RedCap terminal device may be applied to the following scenarios:

### 1. Industrial wireless sensors (industrial wireless sensors):

Compared with URLLC, industrial wireless sensors have relatively low requirements on latency and reliability, and costs and power consumption of such devices are also lower than those of URLLC and eMBB.

### 2. Video surveillance (video surveillance):

Video surveillance is mainly applied in smart city, industry, factories, and the like. For example, video surveillance may be used for data collection and processing in smart city, to more effectively monitor and control urban resources and provide more effective services for urban residents.

### 3. Wearables (wearables):

Wearables include smart watches, rings, electronic health devices, some medical monitoring devices, and the like. A common feature of these devices is a small size.

For the RedCap terminal device, energy saving is an important technical index, especially for devices such as industrial wireless sensors.

In version 17 (R17) of an NR system, the RedCap terminal mainly has the following bandwidth limitations:
for a frequency range 1 (frequency range 1, FR1), a supported maximum bandwidth is 20 MHz; and
for a frequency range 2 (frequency range 2, FR2), a supported maximum bandwidth is 100 MHz.

This maximum bandwidth includes a radio frequency (radio frequency, RF) bandwidth and a baseband (base band, BB) bandwidth.

In version 18 (R18) of the NR system, designs with low complexity and low costs are further introduced for a RedCap UE that supports the FR1 band. For example, a baseband bandwidth may be reduced to 5 MHz, and the 5 MHz baseband bandwidth is only for a physical downlink shared channel (physical downlink share channel, PDSCH) and a physical uplink shared channel (physical uplink share channel, PUSCH). An RF bandwidth may remain unchanged at 20 MHz.

For a RedCap terminal (which, for example, may be referred to as an eRedCap terminal) that supports only the 5 MHz baseband bandwidth (that is, cannot support a baseband bandwidth higher than 5 MHz), for a network, some base stations may not want to restrict a PDSCH transmission bandwidth to serve such a RedCap terminal. Therefore, such a network does not allow access by a RedCap terminal that supports only the 5 MHz baseband bandwidth.

Similarly, to cater to network energy saving, a UE in an energy-saving network that supports specific network energy saving features needs to have these specific network energy saving features. If the UE does not have these specific network energy saving features, the UE cannot access the energy-saving network. For example, the network energy saving features may include that a network device in the energy-saving network does not transmit a synchronization signal block (synchronization signal block, SSB). The UE in the energy-saving network may perform synchronization in another manner. In this case, if the UE does not have this feature, the UE may fail to synchronize with the energy-saving network. Therefore, UE that does not have this feature may fail to access the energy-saving network. Similarly, the network energy saving features may also include that the network device does not transmit a broadcast message or the like, or may include another feature that can reduce network power consumption. This is not limited in embodiments of this application.

In the prior art, regardless of whether a base station receives a paging message from an AMF or an anchor gNB, the base station directly forwards the paging message. In this case, for a cell that does not allow access by a RedCap terminal that supports only the 5 MHz baseband bandwidth, a terminal that supports only the 5 MHz baseband bandwidth cannot camp on the cell. Therefore, it is unnecessary to transmit a paging message in this cell for such a terminal. On the one hand, paging resources are wasted. On the other hand, a quantity of paging false alarms (false alarm) of other terminals increases. As a result, power consumption of the terminals increases (because another terminal that shares a PO needs to decode a PDSCH to determine that the paging message is not transmitted to the another terminal).

Similarly, for an energy-saving network, if a paged UE does not have a network energy saving feature, the energy-saving network does not need to transmit a paging message to the UE, and a quantity of paging false alarms of other UEs also increases.

To resolve one or more of the foregoing technical problems, this application proposes a communication method and a communications apparatus.

The following describes embodiments of this application in detail with reference to FIG. 2 to FIG. 5.

FIG. 2 is a schematic flowchart of a communication method according to an embodiment of this application. The method 200 shown in FIG. 2 may include step S210. Details are as follows.

S210: A first network device receives first information.

The first information may indicate whether a first terminal device supports a first capability.

The first information may be for a target band, or the first information may be for all bands. That is, the first information may be an indication corresponding to a band (per band), or the first information may be an indication that does not distinguish bands (band).

The first capability may include at least one of the following: a RedCap terminal, having only a 5 MHz baseband bandwidth capability for a physical downlink shared channel PDSCH and/or a physical uplink shared channel PUSCH, a RedCap terminal that has only a 5 MHz baseband bandwidth capability for a physical downlink shared channel PDSCH and/or a physical uplink shared channel PUSCH, having only a 5 MHz baseband bandwidth capability, a RedCap terminal that has only a 5 MHz baseband bandwidth capability, or a network energy saving capability. A network energy saving capability may refer to but is not limited to the network energy saving features described in the foregoing embodiments. For example, the network energy saving capability may include but is not limited to: a network device does not transmit an SSB or a network device does not transmit a broadcast message.

It should be noted that a RedCap terminal in this embodiment of this application may be an eRedCap terminal. The eRedCap terminal may refer to (but is not limited to) a RedCap terminal with lower complexity and lower costs.

Optionally, the method 200 may further include step S220. Details are as follows.

S220: The first network device determines a paging policy based on the first information.

Optionally, the paging policy may include whether the first network device transmits a paging message for the first terminal device.

In some embodiments, the first network device may determine, based on the first information and whether the first network device allows access by a terminal device that supports the first capability, whether to transmit a first paging message for the first terminal device.

Specifically, if the first terminal device supports the first capability and the first network device does not allow access by a terminal device that supports the first capability, the first network device may determine not to transmit the first paging message for the first terminal device.

If the first terminal device supports the first capability and the first network device allows access by a terminal device that supports the first capability, the first network device may determine to transmit the first paging message for the first terminal device.

For example, the first information indicates whether the first terminal device has only a 5 MHz baseband (baseband, BB) bandwidth capability for a PDSCH and a PUSCH. If the first terminal device has only the 5 MHz BB bandwidth capability for a PDSCH and a PUSCH, and the first network device does not support or allow access by a terminal device that has only the 5 MHz BB bandwidth capability for a PDSCH and a PUSCH, the first network device determines not to transmit a paging message for the UE in a cell corresponding to the first network device, or does not include a paging identifier (identifier, ID) of the first terminal device in a paging message transmitted in the cell. If the first terminal device has only the 5 MHz BB bandwidth capability for a PDSCH and a PUSCH, and the first network device supports or allows access by a terminal device that has only the 5 MHz BB bandwidth capability for a PDSCH and a PUSCH, the first network device determines to transmit a paging message for the first terminal device in a cell corresponding to the first network device, that is, the paging message transmitted in the cell includes a paging ID of the first terminal device, and ensures, in implementation (for example, in a communication process), that a PDSCH bandwidth corresponding to the paging message transmitted for the first terminal device does not exceed 5 MHz.

In some embodiments, the first network device may determine, based on the first information and whether the first network device allows access by a terminal device that does not support the first capability, whether to transmit a paging message for the first terminal device.

Specifically, if the first terminal device does not support the first capability and the first network device does not allow access by a terminal device that does not support the first capability, the first network device may determine not to transmit the first paging message for the first terminal device.

If the first terminal device does not support the first capability and the first network device allows access by a terminal device that does not support the first capability, the first network device may determine to transmit the first paging message for the first terminal device.

For example, the first information indicates whether the first terminal device supports the network energy saving capability. If the first terminal device does not support the network energy saving capability (that is, the first terminal device is a "non-network energy saving" terminal), and the first network device does not allow access by a terminal device that does not support the network energy saving capability, the first network device determines not to transmit a paging message for the first terminal device in a cell corresponding to the first network device, or does not include a paging ID of the first terminal device in a paging message transmitted in the cell. If the first terminal device does not support the network energy saving capability and the first network device allows access by a terminal device that does not support the network energy saving capability, the first network device determines to transmit a paging message for the first terminal device in a cell corresponding to the first network device, that is, the paging message transmitted in the cell includes a paging ID of the first terminal device.

In this embodiment of this application, a terminal capability indication (for example, a baseband bandwidth capability and/or a non-network energy saving capability indication of a terminal) is introduced into an NG interface message and an Xn interface message. Therefore, a base station that does not support access by a UE with the 5 MHz baseband bandwidth and/or a non-network energy saving UE may reduce transmission of paging messages, thereby reducing a quantity of paging false alarms of other terminal devices and avoiding an increase in power consumption of the terminals. Consequently, energy consumption of a communications system can be reduced.

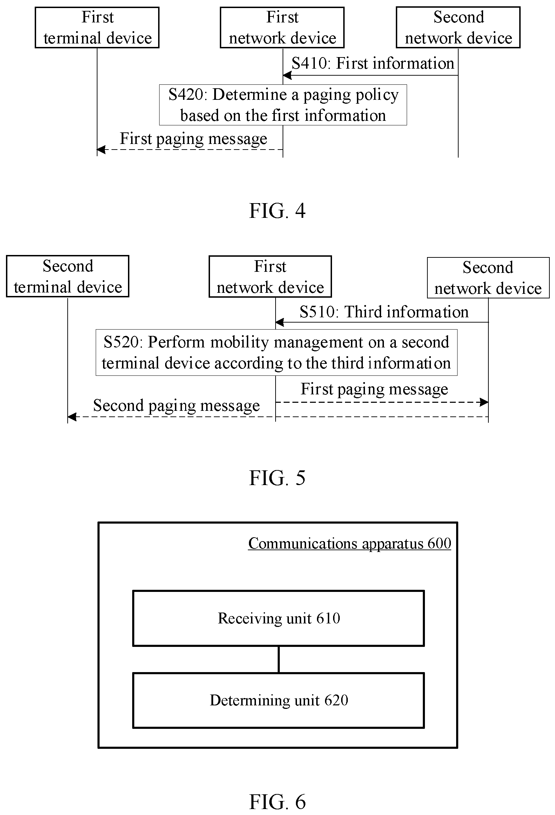

In S210 of the foregoing embodiment, the first information received by the first network device may be transmitted by an AMF network element (as shown in FIG. 3, a terminal capability indication (for example, the first information) is introduced into an NG interface message between the network device and the AMF network element), or may be transmitted by a second network device (as shown in FIG. 4, a terminal capability indication (for example, the first information) is introduced into an Xn interface message between the network devices). The following separately describes these two cases with reference to FIG. 3 and FIG. 4.

FIG. 3 is a schematic flowchart of a communication method according to an embodiment of this application. The method 300 shown in FIG. 3 may include step S310. Details are as follows.

S310: An AMF network element transmits first information to a first network device.

For example, the AMF network element may transmit the first information to the first network device by using an initial context setup request (INITIAL CONTEXT SETUP REQUEST) message or a second paging message.

The initial context setup request message or the second paging message may include a first information element (information element, IE), and the first information may be carried in the first IE.

Optionally, the first IE may be a UE radio paging information (UERadioPagingInformation) IE in the initial context setup request message or the second paging message. Alternatively, the first IE may be another IE in the initial context setup request message or the second paging message.

Alternatively, the first information may be carried in another field in the initial context setup request message or the second paging message.

Optionally, before S310, the method 300 may further include step S320. Details are as follows.

S320: A third network device transmits second information to the AMF network element.

The second information may indicate whether a first terminal device supports a first capability.

The third network device may be a network device that was previously accessed by the first terminal device. For example, before the method 300 is executed, the first terminal device may disconnect from the third network device or handover may occur. The third network device may store an AS context of the first terminal device, and the AS context may include whether the first terminal device supports the first capability.

The third network device may transmit the second information to the AMF network element by using a UE radio capability info indication (UE RADIO CAPABILITY INFO INDICATION) message.

The UE radio capability info indication message may include a second IE, and the second information may be carried in the second IE.

Optionally, the second IE may be a UE radio paging information (UERadioPagingInformation) IE in the UE radio capability info indication message. Alternatively, the second IE may be another IE in the UE radio capability info indication message.

Alternatively, the second IE may be carried in another field in the UE radio capability info indication message.

Optionally, after S310, the method 300 may further include step S330. Details are as follows.

S330: The first network device determines a paging policy based on the first information.

For a specific method for determining the paging policy by the first network device based on the first information, refer to S220 in the foregoing method 200.

Optionally, as shown in FIG. 3, in a case in which it is determined to transmit a first paging message for the first terminal device, the first network device may transmit the first paging message to the first terminal device.

FIG. 4 is a schematic flowchart of a communication method according to an embodiment of this application. The method 400 shown in FIG. 4 may include step S410. Details are as follows.

S410: A second network device transmits first information to a first network device.

For example, the second network device may be an anchor network device (for example, an anchor gNB) of a first terminal device.

For example, the second network device may transmit the first information to the first network device by using a third paging message (a RAN paging message).

The third paging message may include a first information element IE, and the first information may be carried in the first IE.

The first IE may be a UE radio paging information (UERadioPagingInformation) IE in the third paging message. Alternatively, the first IE may be another IE in the third paging message.

Alternatively, the first information may be carried in another field in the third paging message.

Optionally, after S410, the method 400 may further include step S420. Details are as follows.

S420: The first network device determines a paging policy based on the first information.

For a specific method for determining the paging policy by the first network device based on the first information, refer to S220 in the foregoing method 200.

Optionally, as shown in FIG. 4, in a case in which it is determined to transmit a first paging message for the first terminal device, the first network device may transmit the first paging message to the first terminal device.

This application further provides a communication method. A network indication (for example, third information in FIG. 5) is introduced into an Xn interface message between network devices, so that a network device may perform mobility management on a terminal device according to the network indication. The following provides detailed descriptions with reference to FIG. 5.

FIG. 5 is a schematic flowchart of a communication method according to an embodiment of this application. The method 500 shown in FIG. 5 may include step S510. Details are as follows.

S510: A second network device transmits third information to a first network device.

The third information may indicate any one of the following: whether the second network device allows access by a terminal device that supports a first capability, whether the second network device supports a terminal device that supports the first capability, whether the second network device allows access by a terminal device that does not support the first capability, or whether the second network device supports a terminal device that does not support first capability.

The third information may be for a quantity of target receive radio frequency channels (for example, UE Rx branches), or the third information may be for a quantity of all receive radio frequency channels. That is, the third information may separately indicate based on different quantities of UE Rx branches, for example, may separately indicate based on one Rx branch and two Rx branches, or the third information may not distinguish quantities of receive radio frequency channels.

The first capability may include at least one of the following: a RedCap terminal, having only a 5 MHz baseband bandwidth capability for a physical downlink shared channel PDSCH and/or a physical uplink shared channel PUSCH, a RedCap terminal that has only a 5 MHz baseband bandwidth capability for a physical downlink shared channel PDSCH and/or a physical uplink shared channel PUSCH, having only a 5 MHz baseband bandwidth capability, a RedCap terminal that has only a 5 MHz baseband bandwidth capability, or a network energy saving capability. A network energy saving capability may refer to but is not limited to the network energy saving features described in the foregoing embodiments. For example, the network energy saving capability may include: a network device does not transmit an SSB or a network device does not transmit a broadcast message.

It should be noted that a RedCap terminal in this embodiment of this application may be an eRedCap terminal. The eRedCap terminal may refer to (but is not limited to) a RedCap terminal with lower complexity and lower costs.

For example, the third information may indicate any one of the following: whether the second network device allows access by a RedCap terminal, whether the second network device supports a RedCap terminal, whether the second network device allows access by a terminal device or a RedCap terminal device that has only a 5 MHz bandwidth capability for a PDSCH and a PUSCH, or whether the second network device supports a terminal device or a RedCap terminal device that has only a 5 MHz bandwidth capability for a PDSCH and a PUSCH.

In S510, the second network device may transmit the third information to the first network device by using at least one of the following messages:
an Xn setup request (XN SETUP REQUEST) message, an Xn setup response (XN SETUP RESPONSE) message, or an access network node configuration update (NG-RAN NODE CONFIGURATION UPDATE) message.

Optionally, the foregoing message may include a third IE, and the third information may be carried in the third IE.

Optionally, the third IE may be a serving cell information (Served Cell Information NR) IE. Alternatively, the third IE may be another IE in the foregoing message.

Optionally, the third information may be carried in a broadcast information IE for a reduced capability terminal (RedCap Broadcast Information) that is included in the serving cell information IE. Alternatively, the third information may be carried in another IE in the serving cell information IE.

Alternatively, the third information may be carried in another field in the foregoing message.

Optionally, after S510, the method 500 may further include step S520. Details are as follows.

S520: The first network device performs mobility management on a second terminal device according to the third information.

The first network device may determine, based on the third information, a target cell out of which the second terminal device moves. Optionally, the first network device may determine, based on the third information, a proper target cell for the second terminal device in a handover and paging process, as shown in FIG. 5. The second terminal device may support the first capability, or the second terminal device may not support the first capability.

For example, if the second terminal device supports the first capability and the second network device allows access by a terminal device that supports the first capability, the first network device may use the second network device as a target cell out of which the second terminal moves. If the second terminal device supports the first capability and the second network device does not allow access by a terminal device that supports the first capability, the first network device determines not to use the second network device as a target cell out of which the second terminal moves.

For another example, if the second terminal device does not support the first capability and the second network device allows access by a terminal device that does not support the first capability, the first network device may use the second network device as a target cell out of which the second terminal moves. If the second terminal device does not support the first capability and the second network device does not allow access by a terminal device that does not support the first capability, the first network device determines not to use the second network device as a target cell out of which the second terminal moves.

In this embodiment of this application, a network indication (for example, an access control policy of a network for a terminal that supports only a 5 MHz baseband bandwidth and/or a non-network energy saving terminal) is introduced into an Xn interface message, so that a network device can determine a proper target cell when initiating paging or handover for such a UE. For a UE in a non-connected state, unneeded paging transmission may be reduced. For a UE in a connected state, a handover success rate may be improved, and therefore energy consumption of a communications system can be reduced.

The foregoing describes method embodiments of this application in detail with reference to FIG. 1 to FIG. 5, and the following describes apparatus embodiments of this application in detail with reference to FIG. 6 to FIG. 11. It should be understood that the descriptions of the method embodiments correspond to the descriptions of the apparatus embodiments, and therefore, for parts that are not described in detail, refer to the foregoing method embodiments.

FIG. 6 is a schematic structural diagram of a communications apparatus according to an embodiment of this application. As shown in FIG. 6, the apparatus 600 includes a receiving unit 610. Details are as follows.

The receiving unit 610 is configured to receive first information, where the first information indicates whether a first terminal device supports a first capability.

Optionally, the receiving unit 610 is specifically configured to receive the first information transmitted by an access and mobility management function AMF network element.

Optionally, the receiving unit 610 is specifically configured to receive the first information transmitted by the AMF network element by using an initial context setup request message or a second paging message.

Optionally, the initial context setup request message or the second paging message includes a first information element IE, and the first information is carried in the first IE.

Optionally, the receiving unit 610 is specifically configured to receive the first information transmitted by a second network device.

Optionally, the receiving unit 610 is specifically configured to receive the first information transmitted by the second network device by using a third paging message.

Optionally, the third paging message includes a first information element IE, and the first information is carried in the first IE.

Optionally, the first IE is a UE radio paging information IE.

Optionally, the first capability includes at least one of the following: a reduced capability RedCap terminal, having only a 5 MHz baseband bandwidth capability for a physical downlink shared channel PDSCH and/or a physical uplink shared channel PUSCH, a reduced capability RedCap terminal that has only a 5 MHz baseband bandwidth capability for a physical downlink shared channel PDSCH and/or a physical uplink shared channel PUSCH, having only a 5 MHz baseband bandwidth capability, a reduced capability RedCap terminal that has only a 5 MHz baseband bandwidth capability, or a network energy saving capability.

Optionally, the first information is for a target band.

Optionally, the apparatus 600 further includes a determining unit 620, configured to determine a paging policy based on the first information.

Optionally, the determining unit 620 is specifically configured to: determine, based on the first information and whether the apparatus allows access by a terminal device that supports the first capability, whether to transmit a first paging message for the first terminal device.

Optionally, the determining unit 620 is specifically configured to: if the first terminal device supports the first capability and the apparatus does not allow access by a terminal device that supports the first capability, determine not to transmit the first paging message for the first terminal device; or if the first terminal device supports the first capability and the apparatus allows access by a terminal device that supports the first capability, determine to transmit the first paging message for the first terminal device.

Optionally, the determining unit 620 is specifically configured to: determine, based on the first information and whether the apparatus allows access by a terminal device that does not support the first capability, whether to transmit a first paging message for the first terminal device.

Optionally, the determining unit 620 is specifically configured to: if the first terminal device does not support the first capability and the apparatus does not allow access by a terminal device that does not support the first capability, determine not to transmit the first paging message for the first terminal device; or if the first terminal device does not support the first capability and the apparatus allows access by a terminal device that does not support the first capability, determine to transmit the first paging message for the first terminal device.

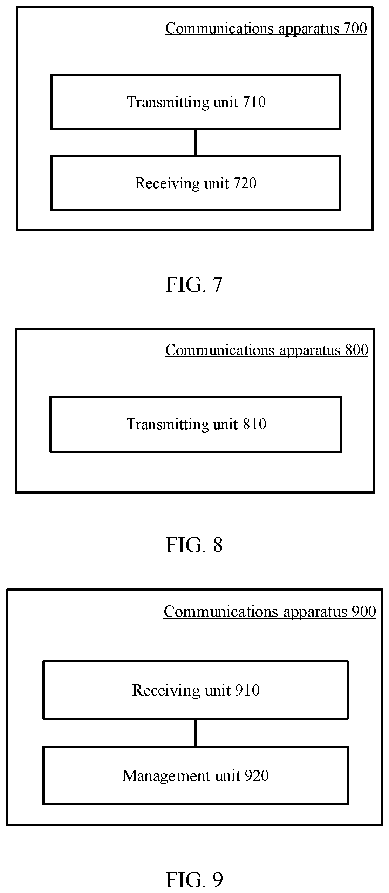

FIG. 7 is a schematic structural diagram of a communications apparatus according to an embodiment of this application. As shown in FIG. 7, the apparatus 700 includes a transmitting unit 710. Details are as follows.

The transmitting unit 710 is configured to transmit first information to a first network device, where the first information indicates whether a first terminal device supports a first capability.

Optionally, the transmitting unit 710 is specifically configured to transmit the first information to the first network device by using an initial context setup request message or a second paging message.

Optionally, the initial context setup request message or the second paging message includes a first information element IE, and the first information is carried in the first IE.

Optionally, the first IE is a UE radio paging information IE.

Optionally, the first capability includes at least one of the following: a reduced capability RedCap terminal, having only a 5 MHz baseband bandwidth capability for a physical downlink shared channel PDSCH and/or a physical uplink shared channel PUSCH, a reduced capability RedCap terminal that has only a 5 MHz baseband bandwidth capability for a physical downlink shared channel PDSCH and/or a physical uplink shared channel PUSCH, having only a 5 MHz baseband bandwidth capability, a reduced capability RedCap terminal that has only a 5 MHz baseband bandwidth capability, or a network energy saving capability.

Optionally, the first information is for a target band.

Optionally, the apparatus 700 further includes a receiving unit 720, configured to receive second information transmitted by a third network device, where the second information indicates whether the first terminal device supports the first capability.

Optionally, the receiving unit 720 is specifically configured to receive the second information transmitted by the third network device by using a UE radio capability info indication message.

Optionally, the UE radio capability info indication message includes a second information element IE, and the second information is carried in the second IE.

Optionally, the second IE is a UE radio paging information IE.

FIG. 8 is a schematic structural diagram of a communications apparatus according to an embodiment of this application. As shown in FIG. 8, the apparatus 800 includes a transmitting unit 810. Details are as follows.

The transmitting unit 810 is configured to transmit first information to a first network device, where the first information indicates whether a first terminal device supports a first capability.

Optionally, the transmitting unit 810 is specifically configured to transmit the first information to the first network device by using a third paging message.

Optionally, the third paging message includes a first information element IE, and the first information is carried in the first IE.

Optionally, the first IE is a UE radio paging information IE.

Optionally, the first capability includes at least one of the following: a reduced capability RedCap terminal, having only a 5 MHz baseband bandwidth capability for a physical downlink shared channel PDSCH and/or a physical uplink shared channel PUSCH, a reduced capability RedCap terminal that has only a 5 MHz baseband bandwidth capability for a physical downlink shared channel PDSCH and/or a physical uplink shared channel PUSCH, having only a 5 MHz baseband bandwidth capability, a reduced capability RedCap terminal that has only a 5 MHz baseband bandwidth capability, or a network energy saving capability.

Optionally, the first information is for a target band.

FIG. 9 is a schematic structural diagram of a communications apparatus according to an embodiment of this application. As shown in FIG. 9, the apparatus 900 includes a receiving unit 910. Details are as follows.

The receiving unit 910 is configured to receive third information transmitted by a second network device, where the third information indicates any one of the following: whether the second network device allows access by a terminal device that supports a first capability, whether the second network device supports a terminal device that supports the first capability, whether the second network device allows access by a terminal device that does not support the first capability, or whether the second network device supports a terminal device that does not support the first capability.

Optionally, the receiving unit 910 is specifically configured to receive the third information transmitted by the second network device by using at least one of the following messages: an Xn setup request message, an Xn setup response message, or an access network node configuration update message.

Optionally, the message includes a third information element IE, and the third information is carried in the third IE.

Optionally, the third IE is a serving cell information IE.

Optionally, the third information is carried in a broadcast information IE for a reduced capability terminal that is included in the serving cell information IE.

Optionally, the apparatus 900 further includes a management unit 920, configured to perform mobility management on a second terminal device according to the third information.

Optionally, the management unit 920 is specifically configured to determine, based on the third information, a proper target cell for the second terminal device in a handover and paging process.

Optionally, the second terminal device supports the first capability, or the second terminal device does not support the first capability.

Optionally, the first capability includes at least one of the following: a reduced capability RedCap terminal, having only a 5 MHz baseband bandwidth capability for a physical downlink shared channel PDSCH and/or a physical uplink shared channel PUSCH, a reduced capability RedCap terminal that has only a 5 MHz baseband bandwidth capability for a physical downlink shared channel PDSCH and/or a physical uplink shared channel PUSCH, having only a 5 MHz baseband bandwidth capability, a reduced capability RedCap terminal that has only a 5 MHz baseband bandwidth capability, or a network energy saving capability.

Optionally, the third information is for a quantity of target receive radio frequency channels.

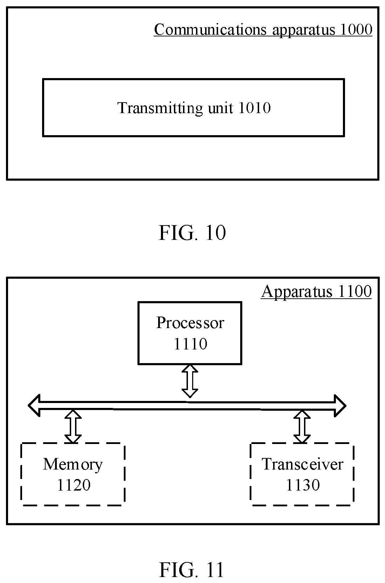

FIG. 10 is a schematic structural diagram of a communications apparatus according to an embodiment of this application. As shown in FIG. 10, the apparatus 1000 includes a transmitting unit 1010. Details are as follows.

The transmitting unit 1010 is configured to transmit third information to a first network device, where the third information indicates any one of the following: whether the apparatus allows access by a terminal device that supports a first capability, whether the apparatus supports a terminal device that supports the first capability, whether the apparatus allows access by a terminal device that does not support the first capability, or whether the apparatus supports a terminal device that does not support the first capability.

Optionally, the transmitting unit 1010 is specifically configured to transmit the third information to the first network device by using at least one of the following messages: an Xn setup request message, an Xn setup response message, or an access network node configuration update message.

Optionally, the message includes a third information element IE, and the third information is carried in the third IE.

Optionally, the third IE is a serving cell information IE.

Optionally, the third information is carried in a broadcast information IE for a reduced capability terminal that is included in the serving cell information IE.

Optionally, the first capability includes at least one of the following: a reduced capability RedCap terminal, having only a 5 MHz baseband bandwidth capability for a physical downlink shared channel PDSCH and/or a physical uplink shared channel PUSCH, a reduced capability RedCap terminal that has only a 5 MHz baseband bandwidth capability for a physical downlink shared channel PDSCH and/or a physical uplink shared channel PUSCH, having only a 5 MHz baseband bandwidth capability, a reduced capability RedCap terminal that has only a 5 MHz baseband bandwidth capability, or a network energy saving capability.

Optionally, the third information is for a quantity of target receive radio frequency channels.

FIG. 11 is a schematic structural diagram of an apparatus according to an embodiment of this application. The dashed lines in FIG. 11 indicate that the unit or module is optional. The apparatus 1100 may be configured to implement the methods described in the foregoing method embodiments. The apparatus 1100 may be a chip or a communications apparatus.

The apparatus 1100 may include one or more processors 1110. The processor 1110 may allow the apparatus 1100 to implement the methods described in the foregoing method embodiments. The processor 1110 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1100 may further include one or more memories 1120. The memory 1120 stores a program, where the program may be executed by the processor 1110, to cause the processor 1110 to execute the methods described in the foregoing method embodiments. The memory 1120 may be separate from the processor 1110 or may be integrated into the processor 1110.

The apparatus 1100 may further include a transceiver 1130. The processor 1110 may communicate with another device or chip by using the transceiver 1130. For example, the processor 1110 may transmit data to and receive data from another device or chip by using the transceiver 1130.

An embodiment of this application further provides a computer-readable storage medium, configured to store a program. The computer-readable storage medium may be applied to a communications apparatus provided in embodiments of this application, and the program causes a computer to execute the methods to be executed by the communications apparatus in various embodiments of this application.

An embodiment of this application further provides a computer program product. The computer program product includes a program. The computer program product may be applied to a communications apparatus provided in embodiments of this application, and the program causes a computer to execute the methods to be executed by the communications apparatus in various embodiments of this application.

An embodiment of this application further provides a computer program. The computer program may be applied to a communications apparatus provided in embodiments of this application, and the computer program causes a computer to execute the methods to be executed by the communications apparatus in various embodiments of this application.

It should be understood that, in embodiments of this application, "B that corresponds to A" means that B is associated with A, and B may be determined based on A. However, it should also be understood that, determining B based on A does not mean determining B based only on A, but instead, B may be determined based on A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not be construed as any limitation on the implementation processes of embodiments of this application.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first network device, first information, wherein the first information indicates whether a first terminal device supports a first capability.

2. The method according to claim 1, wherein the receiving, by a first network device, first information comprises:
receiving, by the first network device, the first information transmitted by an access and mobility management function AMF network element.

3. The method according to claim 2, wherein the receiving, by the first network device, the first information transmitted by an access and mobility management function AMF network element comprises:
receiving, by the first network device, the first information transmitted by the AMF network element by using an initial context setup request message or a second paging message.

4. The method according to claim 3, wherein the initial context setup request message or the second paging message comprises a first information element IE, and the first information is carried in the first IE.

5. The method according to claim 1, wherein the receiving, by a first network device, first information comprises:
receiving, by the first network device, the first information transmitted by a second network device.

6. The method according to claim 5, wherein the receiving, by the first network device, the first information transmitted by a second network device comprises:
receiving, by the first network device, the first information transmitted by the second network device by using a third paging message.

7. The method according to claim 6, wherein the third paging message comprises a first information element IE, and the first information is carried in the first IE.

8. The method according to claim 4 or 7, wherein the first IE is a UE radio paging information IE.

9. The method according to any one of claims 1 to 8, wherein the first capability comprises at least one of following:
a reduced capability RedCap terminal, having only a 5 MHz baseband bandwidth capability for a physical downlink shared channel PDSCH and/or a physical uplink shared channel PUSCH, a RedCap terminal that has only a 5 MHz baseband bandwidth capability for a PDSCH and/or a PUSCH, having only a 5 MHz baseband bandwidth capability, a RedCap terminal that has only a 5 MHz baseband bandwidth capability, or a network energy saving capability.

10. The method according to any one of claims 1 to 9, wherein the first information is for a target band.

11. The method according to any one of claims 1 to 10, wherein the method further comprises:
determining, by the first network device, a paging policy based on the first information.

12. The method according to claim 11, wherein the determining, by the first network device, a paging policy based on the first information comprises:
determining, by the first network device based on the first information and whether the first network device allows access by a terminal device that supports the first capability, whether to transmit a first paging message for the first terminal device.

13. The method according to claim 12, wherein the determining, by the first network device based on the first information and whether the first network device allows access by a terminal device that supports the first capability, whether to transmit a first paging message for the first terminal device comprises:
if the first terminal device supports the first capability and the first network device does not allow access by a terminal device that supports the first capability, determining, by the first network device, not to transmit the first paging message for the first terminal device; or
if the first terminal device supports the first capability and the first network device allows access by a terminal device that supports the first capability, determining, by the first network device, to transmit the first paging message for the first terminal device.

14. The method according to claim 11, wherein the determining, by the first network device, a paging policy based on the first information comprises:
determining, by the first network device based on the first information and whether the first network device allows access by a terminal device that does not support the first capability, whether to transmit a first paging message for the first terminal device.

15. The method according to claim 14, wherein the determining, by the first network device based on the first information and whether the first network device allows access by a terminal device that does not support the first capability, whether to transmit a first paging message for the first terminal device comprises:
if the first terminal device does not support the first capability and the first network device does not allow access by a terminal device that does not support the first capability, determining, by the first network device, not to transmit the first paging message for the first terminal device; or
if the first terminal device does not support the first capability and the first network device allows access by a terminal device that does not support the first capability, determining, by the first network device, to transmit the first paging message for the first terminal device.

16. A communication method, comprising:
transmitting, by an access and mobility management function AMF network element, first information to a first network device, wherein the first information indicates whether a first terminal device supports a first capability.

17. The method according to claim 16, wherein the transmitting, by an access and mobility management function AMF network element, first information to a first network device comprises:
transmitting, by the AMF network element, the first information to the first network device by using an initial context setup request message or a second paging message.

18. The method according to claim 17, wherein the initial context setup request message or the second paging message comprises a first information element IE, and the first information is carried in the first IE.

19. The method according to claim 18, wherein the first IE is a UE radio paging information IE.

20. The method according to any one of claims 16 to 19, wherein the first capability comprises at least one of following:
a reduced capability RedCap terminal, having only a 5 MHz baseband bandwidth capability for a physical downlink shared channel PDSCH and/or a physical uplink shared channel PUSCH, a RedCap terminal that has only a 5 MHz baseband bandwidth capability for a PDSCH and/or a PUSCH, having only a 5 MHz baseband bandwidth capability, a RedCap terminal that has only a 5 MHz baseband bandwidth capability, or a network energy saving capability.

21. The method according to any one of claims 16 to 20, wherein the first information is for a target band.

22. The method according to any one of claims 16 to 21, wherein the method further comprises:
receiving, by the AMF network element, second information transmitted by a third network device, wherein the second information indicates whether the first terminal device supports the first capability.

23. The method according to claim 22, wherein the receiving, by the AMF network element, second information transmitted by a third network device comprises:
receiving, by the AMF network element, the second information transmitted by the third network device by using a UE radio capability info indication message.

24. The method according to claim 23, wherein the UE radio capability info indication message comprises a second information element IE, and the second information is carried in the second IE.

25. The method according to claim 24, wherein the second IE is a UE radio paging information IE.

26. A communication method, comprising:
transmitting, by a second network device, first information to a first network device, wherein the first information indicates whether a first terminal device supports a first capability.

27. The method according to claim 26, wherein the transmitting, by a second network device, first information to a first network device comprises:
transmitting, by the second network device, the first information to the first network device by using a third paging message.

28. The method according to claim 27, wherein the third paging message comprises a first information element IE, and the first information is carried in the first IE.

29. The method according to claim 28, wherein the first IE is a UE radio paging information IE.

30. The method according to any one of claims 26 to 29, wherein the first capability comprises at least one of following:
a reduced capability RedCap terminal, having only a 5 MHz baseband bandwidth capability for a physical downlink shared channel PDSCH and/or a physical uplink shared channel PUSCH, a RedCap terminal that has only a 5 MHz baseband bandwidth capability for a PDSCH and/or a PUSCH, having only a 5 MHz baseband bandwidth capability, a RedCap terminal that has only a 5 MHz baseband bandwidth capability, or a network energy saving capability.

31. The method according to any one of claims 26 to 30, wherein the first information is for a target band.

32. A communication method, comprising:
receiving, by a first network device, third information transmitted by a second network device, wherein the third information indicates any one of following: whether the second network device allows access by a terminal device that supports a first capability, whether the second network device supports a terminal device that supports the first capability, whether the second network device allows access by a terminal device that does not support the first capability, or whether the second network device supports a terminal device that does not support the first capability.

33. The method according to claim 32, wherein the receiving, by a first network device, third information transmitted by a second network device comprises:
receiving, by the first network device, the third information transmitted by the second network device by using at least one of following messages:
an Xn setup request message, an Xn setup response message, or an access network node configuration update message.

34. The method according to claim 33, wherein the message comprises a third information element IE, and the third information is carried in the third IE.

35. The method according to claim 34, wherein the third IE is a serving cell information IE.

36. The method according to claim 35, wherein the third information is carried in a broadcast information IE for a reduced capability terminal that is comprised in the serving cell information IE.

37. The method according to any one of claims 32 to 36, wherein the method further comprises:
performing, by the first network device, mobility management on a second terminal device according to the third information.

38. The method according to claim 37, wherein the performing, by the first network device, mobility management on a second terminal device according to the third information comprises:
determining, by the first network device based on the third information, a proper target cell for the second terminal device in a handover and paging process.

39. The method according to claim 37 or 38, wherein the second terminal device supports the first capability, or the second terminal device does not support the first capability.

40. The method according to any one of claims 32 to 39, wherein the first capability comprises at least one of following:
a reduced capability RedCap terminal, having only a 5 MHz baseband bandwidth capability for a physical downlink shared channel PDSCH and/or a physical uplink shared channel PUSCH, a RedCap terminal that has only a 5 MHz baseband bandwidth capability for a PDSCH and/or a PUSCH, having only a 5 MHz baseband bandwidth capability, a RedCap terminal that has only a 5 MHz baseband bandwidth capability, or a network energy saving capability.

41. The method according to any one of claims 32 to 40, wherein the third information is for a quantity of target receive radio frequency channels.

42. A communication method, comprising:
transmitting, by a second network device, third information to a first network device, wherein the third information indicates any one of following: whether the second network device allows access by a terminal device that supports a first capability, whether the second network device supports a terminal device that supports the first capability, whether the second network device allows access by a terminal device that does not support the first capability, or whether the second network device supports a terminal device that does not support the first capability.

43. The method according to claim 42, wherein the transmitting, by a second network device, third information to a first network device comprises:
transmitting, by the second network device, the third information to the first network device by using at least one of following messages:
an Xn setup request message, an Xn setup response message, or an access network node configuration update message.

44. The method according to claim 43, wherein the message comprises a third information element IE, and the third information is carried in the third IE.

45. The method according to claim 44, wherein the third IE is a serving cell information IE.

46. The method according to claim 45, wherein the third information is carried in a broadcast information IE for a reduced capability terminal that is comprised in the serving cell information IE.

47. The method according to any one of claims 42 to 46, wherein the first capability comprises at least one of following:
a reduced capability RedCap terminal, having only a 5 MHz baseband bandwidth capability for a physical downlink shared channel PDSCH and/or a physical uplink shared channel PUSCH, a RedCap terminal that has only a 5 MHz baseband bandwidth capability for a PDSCH and/or a PUSCH, having only a 5 MHz baseband bandwidth capability, a RedCap terminal that has only a 5 MHz baseband bandwidth capability, or a network energy saving capability.

48. The method according to any one of claims 42 to 47, wherein the third information is for a quantity of target receive radio frequency channels.

49. A communications apparatus, comprising:
a receiving unit, configured to receive first information, wherein the first information indicates whether a first terminal device supports a first capability.

50. The apparatus according to claim 49, wherein the receiving unit is specifically configured to receive the first information transmitted by an access and mobility management function AMF network element.

51. The apparatus according to claim 50, wherein the receiving unit is specifically configured to receive the first information transmitted by the AMF network element by using an initial context setup request message or a second paging message.

52. The apparatus according to claim 51, wherein the initial context setup request message or the second paging message comprises a first information element IE, and the first information is carried in the first IE.

53. The apparatus according to claim 49, wherein the receiving unit is specifically configured to receive the first information transmitted by a second network device.

54. The apparatus according to claim 53, wherein the receiving unit is specifically configured to receive the first information transmitted by the second network device by using a third paging message.

55. The apparatus according to claim 54, wherein the third paging message comprises a first information element IE, and the first information is carried in the first IE.

56. The apparatus according to claim 52 or 55, wherein the first IE is a UE radio paging information IE.

57. The apparatus according to any one of claims 49 to 56, wherein the first capability comprises at least one of following:
a reduced capability RedCap terminal, having only a 5 MHz baseband bandwidth capability for a physical downlink shared channel PDSCH and/or a physical uplink shared channel PUSCH, a RedCap terminal that has only a 5 MHz baseband bandwidth capability for a PDSCH and/or a PUSCH, having only a 5 MHz baseband bandwidth capability, a RedCap terminal that has only a 5 MHz baseband bandwidth capability, or a network energy saving capability.

58. The apparatus according to any one of claims 49 to 57, wherein the first information is for a target band.

59. The apparatus according to any one of claims 49 to 58, wherein the apparatus further comprises a determining unit, configured to determine a paging policy based on the first information.

60. The apparatus according to claim 59, wherein the determining unit is specifically configured to determine, based on the first information and whether the apparatus allows access by a terminal device that supports the first capability, whether to transmit a first paging message for the first terminal device.

61. The apparatus according to claim 60, wherein the determining unit is specifically configured to:
if the first terminal device supports the first capability and the apparatus does not allow access by a terminal device that supports the first capability, determine not to transmit the first paging message for the first terminal device; or
if the first terminal device supports the first capability and the apparatus allows access by a terminal device that supports the first capability, determine to transmit the first paging message for the first terminal device.

62. The apparatus according to claim 59, wherein the determining unit is specifically configured to:
determine, based on the first information and whether the apparatus allows access by a terminal device that does not support the first capability, whether to transmit a first paging message for the first terminal device.

63. The apparatus according to claim 62, wherein the determining unit is specifically configured to:
if the first terminal device does not support the first capability and the apparatus does not allow access by a terminal device that does not support the first capability, determine not to transmit the first paging message for the first terminal device; or
if the first terminal device does not support the first capability and the apparatus allows access by a terminal device that does not support the first capability, determine to transmit the first paging message for the first terminal device.

64. A communications apparatus, comprising:
a transmitting unit, configured to transmit first information to a first network device, wherein the first information indicates whether a first terminal device supports a first capability.

65. The apparatus according to claim 64, wherein the transmitting unit is specifically configured to transmit the first information to the first network device by using an initial context setup request message or a second paging message.

66. The apparatus according to claim 65, wherein the initial context setup request message or the second paging message comprises a first information element IE, and the first information is carried in the first IE.

67. The apparatus according to claim 66, wherein the first IE is a UE radio paging information IE.

68. The apparatus according to any one of claims 64 to 67, wherein the first capability comprises at least one of following:
a reduced capability RedCap terminal, having only a 5 MHz baseband bandwidth capability for a physical downlink shared channel PDSCH and/or a physical uplink shared channel PUSCH, a RedCap terminal that has only a 5 MHz baseband bandwidth capability for a PDSCH and/or a PUSCH, having only a 5 MHz baseband bandwidth capability, a RedCap terminal that has only a 5 MHz baseband bandwidth capability, or a network energy saving capability.

69. The apparatus according to any one of claims 64 to 68, wherein the first information is for a target band.

70. The apparatus according to any one of claims 64 to 69, wherein the apparatus further comprises a receiving unit, configured to receive second information transmitted by a third network device, wherein the second information indicates whether the first terminal device supports the first capability.

71. The apparatus according to claim 70, wherein the receiving unit is specifically configured to receive the second information transmitted by the third network device by using a UE radio capability info indication message.

72. The apparatus according to claim 71, wherein the UE radio capability info indication message comprises a second information element IE, and the second information is carried in the second IE.

73. The method according to claim 72, wherein the second IE is a UE radio paging information IE.

74. A communications apparatus, comprising:
a transmitting unit, configured to transmit first information to a first network device, wherein the first information indicates whether a first terminal device supports a first capability.

75. The apparatus according to claim 74, wherein the transmitting unit is specifically configured to transmit the first information to the first network device by using a third paging message.

76. The apparatus according to claim 75, wherein the third paging message comprises a first information element IE, and the first information is carried in the first IE.

77. The apparatus according to claim 76, wherein the first IE is a UE radio paging information IE.

78. The apparatus according to any one of claims 74 to 77, wherein the first capability comprises at least one of following:
a reduced capability RedCap terminal, having only a 5 MHz baseband bandwidth capability for a physical downlink shared channel PDSCH and/or a physical uplink shared channel PUSCH, a RedCap terminal that has only a 5 MHz baseband bandwidth capability for a PDSCH and/or a PUSCH, having only a 5 MHz baseband bandwidth capability, a RedCap terminal that has only a 5 MHz baseband bandwidth capability, or a network energy saving capability.

79. The apparatus according to any one of claims 74 to 78, wherein the first information is for a target band.

80. A communications apparatus, comprising:
a receiving unit, configured to receive third information transmitted by a second network device, wherein the third information indicates any one of following: whether the second network device allows access by a terminal device that supports a first capability, whether the second network device supports a terminal device that supports the first capability, whether the second network device allows access by a terminal device that does not support the first capability, or whether the second network device supports a terminal device that does not support the first capability.

81. The apparatus according to claim 80, wherein the receiving unit is specifically configured to receive the third information transmitted by the second network device by using at least one of following messages: an Xn setup request message, an Xn setup response message, or an access network node configuration update message.

82. The apparatus according to claim 81, wherein the message comprises a third information element IE, and the third information is carried in the third IE.

83. The apparatus according to claim 82, wherein the third IE is a serving cell information IE.

84. The apparatus according to claim 83, wherein the third information is carried in a broadcast information IE for a reduced capability terminal that is comprised in the serving cell information IE.

85. The apparatus according to any one of claims 80 to 84, wherein the apparatus further comprises a management unit, configured to perform mobility management on a second terminal device according to the third information.

86. The apparatus according to claim 85, wherein the management unit is specifically configured to determine, based on the third information, a proper target cell for the second terminal device in a handover and paging process.

87. The apparatus according to claim 85 or 86, wherein the second terminal device supports the first capability, or the second terminal device does not support the first capability.

88. The apparatus according to any one of claims 80 to 87, wherein the first capability comprises at least one of following:
a reduced capability RedCap terminal, having only a 5 MHz baseband bandwidth capability for a physical downlink shared channel PDSCH and/or a physical uplink shared channel PUSCH, a RedCap terminal that has only a 5 MHz baseband bandwidth capability for a PDSCH and/or a PUSCH, having only a 5 MHz baseband bandwidth capability, a RedCap terminal that has only a 5 MHz baseband bandwidth capability, or a network energy saving capability.

89. The apparatus according to any one of claims 80 to 88, wherein the third information is for a quantity of target receive radio frequency channels.

90. A communications apparatus, comprising:
a transmitting unit, configured to transmit third information to a first network device, wherein the third information indicates any one of following: whether the apparatus allows access by a terminal device that supports a first capability, whether the apparatus supports a terminal device that supports the first capability, whether the apparatus allows access by a terminal device that does not support the first capability, or whether the apparatus supports a terminal device that does not support the first capability.

91. The apparatus according to claim 90, wherein the transmitting unit is specifically configured to transmit the third information to the first network device by using at least one of following messages: an Xn setup request message, an Xn setup response message, or an access network node configuration update message.

92. The apparatus according to claim 91, wherein the message comprises a third information element IE, and the third information is carried in the third IE.

93. The apparatus according to claim 92, wherein the third IE is a serving cell information IE.

94. The apparatus according to claim 93, wherein the third information is carried in a broadcast information IE for a reduced capability terminal that is comprised in the serving cell information IE.

95. The apparatus according to any one of claims 90 to 94, wherein the first capability comprises at least one of following:
a reduced capability RedCap terminal, having only a 5 MHz baseband bandwidth capability for a physical downlink shared channel PDSCH and/or a physical uplink shared channel PUSCH, a RedCap terminal that has only a 5 MHz baseband bandwidth capability for a PDSCH and/or a PUSCH, having only a 5 MHz baseband bandwidth capability, a RedCap terminal that has only a 5 MHz baseband bandwidth capability, or a network energy saving capability.

96. The apparatus according to any one of claims 90 to 95, wherein the third information is for a quantity of target receive radio frequency channels.

97. A communications apparatus, comprising a memory, a transceiver, and a processor, wherein the memory is configured to store a program, the processor performs data transmission and reception by using the transceiver, and the processor is configured to invoke the program in the memory to cause the communications apparatus to execute a method according to any one of claims 1 to 15 or any one of claims 26 to 48.

98. A communications apparatus, comprising a memory, a transceiver, and a processor, wherein the memory is configured to store a program, the processor performs data transmission and reception by using the transceiver, and the processor is configured to invoke the program in the memory to cause the communications apparatus to execute the method according to any one of claims 16 to 25.

99. A communications apparatus, comprising a processor configured to invoke a program from a memory to cause the communications apparatus to execute a method according to any one of claims 1 to 15 or any one of claims 26 to 48.

100. A communications apparatus, comprising a processor configured to invoke a program from a memory to cause the communications apparatus to execute the method according to any one of claims 16 to 25.

101. A chip, comprising a processor configured to invoke a program from a memory to cause a device on which the chip is installed to execute a method according to any one of claims 1 to 15 or any one of claims 26 to 48.

102. A chip, comprising a processor configured to invoke a program from a memory to cause a device on which the chip is installed to execute the method according to any one of claims 16 to 25.

103. A computer-readable storage medium, wherein the computer-readable storage medium stores a program, and the program causes a computer to execute a method according to any one of claims 1 to 15 or any one of claims 26 to 48.

104. A computer-readable storage medium, wherein the computer-readable storage medium stores a program, and the program causes a computer to execute the method according to any one of claims 16 to 25.

105. A computer program product, comprising a program, wherein the program causes a computer to execute a method according to any one of claims 1 to 15 or any one of claims 26 to 48.

106. A computer program product, comprising a program, wherein the program causes a computer to execute the method according to any one of claims 16 to 25.

107. A computer program, wherein the computer program causes a computer to execute a method according to any one of claims 1 to 15 or any one of claims 26 to 48.

108. A computer program, wherein the computer program causes a computer to execute the method according to any one of claims 16 to 25.
